# EUROPEAN PATENT SPECIFICATION

(11) **EP 4 012 198 B1**
(45) Date of publication and mention of the grant of the patent: **23.04.2025**
(21) Application number: 21205757.4
(22) Date of filing: 01.11.2021
(51) Int. Cl.: F16B 13/08

(54) **LOCKING ASSEMBLY**
SPERRANORDNUNG
ENSEMBLE DE VERROUILLAGE

(30) Priority: 08.12.2020 CN 202011422695
(43) Date of publication of application: 15.06.2022
(73) Proprietor: Xiamen Beewill Sanitary Co., Ltd., Xiamen, Fujian 361022 (CN)
(72) Inventor: Ren, Shisong, Xiamen, 361022 (CN); Cai, Liangquan, Xiamen, 361022 (CN); Lv, Yonglong, Xiamen, 361022 (CN)
(74) Representative: Ipey

(56) References cited:
- EP-A2- 1 512 874
- CN-A- 106 725 061
- CN-U- 209 966 254
- US-A- 3 302 508

## Description

### Technical Field

The present invention relates to the technical field of fixing devices, and in particular to a locking assembly.

### Background Art

When a cover plate is to be installed on a toilet body, locking assemblies are required, most of which are combinations of expansion bolts and screw rods. To install the cover plate, firstly, the expansion bolt made of plastic or rubber is installed into a reserved hole of the toilet body; then the screw rod penetrates an installation support to be connected to the expansion bolt, to fix the installation support of the cover plate; and finally, a rotary shaft of the cover plate is connected to the installation support, to rotatably install the cover plate. Being made of plastic or rubber, most expansion bolts will creep and loosen after long-term use, and are likely to be damaged when violently installed.

In order to solve the problems described above, some existing locking assemblies are metallic. However, a metal locking assembly cannot be rapidly installed or disassembled, and is likely to be damaged when improperly installed or violently disassembled.
EP1512874, CN209966254U and CN106725061A disclose a locking assembly, comprising:
a retainer provided with first and second sliding grooves which are oppositely arranged and in communication with each other;
a hinge shaft capable of moving in the first and second sliding grooves; and
   a fastener having first and second fastening sheets separately hinged to the hinge shaft, the fastener having a relative disengagement state and a relative engagement state, each fastener being capable of being accommodated in the retainer when in the relative disengagement state and being provided with a limiting structure for keeping the fastener at a specific disengagement angle.

### Summary of the Invention

The present invention aims to solve one of the technical problems in the art described above at least to a certain extent. Thus, it is an objective of the present invention to provide a locking assembly, which is rapidly disassembled and reusable.

In order to achieve the objective described above, the present invention provides a locking assembly , comprising:
a retainer provided with first and second sliding grooves which are oppositely arranged and in communication with each other, the first fastening sheet moving in the first sliding groove, and the second fastening sheet moving in the second sliding groove;
a hinge shaft capable of moving in the first and second sliding grooves ; and
a fastener having first and second fastening sheets separately hinged to the hinge shaft, the fastener having a relative disengagement state and a relative engagement state, each fastener being capable of being accommodated in the retainer when in the relative disengagement state and being provided with a limiting structure for keeping the fastener at a specific disengagement angle, the locking assembly further comprising an actuating positioner, the actuating positioner being connected to the fastener and capable of driving the fastener to move and keeping the fastener at a specific position, wherein the actuating positioner comprises a bolt and a threaded through hole radially formed in the hinge shaft, the bolt penetrating the retainer to be connected to the threaded through hole characterised in that the first fastening sheet and the second fastening sheet comprise first hinge plates and second hinge plates which are oppositely arranged, and connecting plates for connecting the first hinge plate to the second hinge plate, parts, close to hinge ends, of the connecting plates of the first fastening sheet and the second fastening sheet being provided with cut grooves separately; and the limiting structure enabling an end part of the hinge end of the first hinge plate of the first fastening sheet to be in abutting fit with a bottom of the cut groove of the second fastening sheet, and an end part of the hinge end of the first hinge plate of the second fastening sheet to be in abutting fit with a bottom of the cut groove of the first fastening sheet, the first sliding groove being provided with a first inclined guide surface for engaging the first fastening sheet relative to the second fastening sheet , the second sliding groove being provided with a second inclined guide surface for engaging the second fastening sheet relative to the first fastening sheet , the first inclined guide surface being disposed opposite the second inclined guide surface .

The retainer may be provided with a first sliding rail and a second sliding rail which are oppositely arranged and in communication with each other, a first end of the hinge shaft moving in the first sliding rail , a second end of the hinge shaft moving in the second sliding rail , and the first end and the second end of the hinge shaft being provided with opposite sliding planes separately.

At least one of opposite side walls of one ends, close to a first inclined guide surface and a second inclined guide surface , of the first sliding rail and the second sliding rail may be provided with a limiting protrusion point , the limiting protrusion point dividing the first sliding rail and the second sliding rail into upper travel sections and lower travel sections, and the lower travel sections exactly accommodating the hinge shaft .

### Brief Description of the Drawings

Fig. 1 is an exploded perspective view of a locking assembly according to the present invention;
Fig. 2 is an assembled perspective view of the locking assembly according to the present invention;
Fig. 3 is a schematic diagram of the locking assembly in a pre-assembled state according to the present invention;
Fig. 4 is a schematic diagram of the locking assembly in a locking state according to the present invention;
Fig. 5 is a schematic diagram of the locking assembly in an unlocking state according to the present invention;
Fig. 6 is a schematic diagram of the locking assembly, reset and taken out, according to the present invention; and
Fig. 7 is a structural schematic diagram of the locking assembly, installed at a toilet, according to the present invention.

**Reference numerals:**

| | | | |
|---|---|---|---|
| locking assembly | 10 | retainer | 1 |
| sliding groove | 11 | first sliding groove | 111 |
| second sliding groove | 112 | first inclined guide surface | 113 |
| second inclined guide surface | 114 | first sliding rail | 12 |
| second sliding rail | 13 | limiting protrusion point | 14 |
| fastener | 2 | first fastening sheet | 21 |
| second fastening sheet | 22 | first hinge plate | 211, 221 |
| second hinge plate | 212, 222 | connecting plate | 213, 223 |
| sliding plane | 31 | actuating positioner | 4 |
| bolt | 41 | threaded through hole | 42 |
| support | 20 | cover plate | 30 |
| toilet body | 40 | hinge shaft | 3 |
| cut groove | 214, 224 | | |

### Detailed Description of Embodiments

The embodiments of the present invention are described in detail below, the examples of which are illustrated in the accompanying drawings, where the same or similar reference numerals refer to the same or similar elements or elements having the same or similar functions throughout. The following embodiment is described with reference to the accompanying drawings is exemplary and intended to explain the present invention, instead of being construed as limiting the present invention.

Disclosed is a locking assembly, including a retainer and a fastener, the retainer being provided with a sliding groove, and the fastener being capable of moving in the sliding groove, having a relative disengagement state and a relative engagement state, being capable of being accommodated in the retainer when in the relative engagement state, and being provided with a limiting structure for keeping the fastener at a specific disengagement angle. The fastener is used as a locking abutment, to realize a locking function when in the relative disengagement state; and the fastener may be accommodated in the retainer when in the relative engagement state, to reduce an entire width of the fastener, and thus it is convenient to disassemble the retainer and the fastener integrally, and the locking assembly is rapidly disassembled and reusable.

In order to better understand the technical solution described above, an exemplary embodiment of the present invention will be described in more detail below with reference to the accompanying drawings. While the exemplary embodiment of the present invention is shown in the accompanying drawings, it should be understood that the present invention may be implemented in various forms without being limited by the embodiment set forth herein. In contrast, the embodiment is provided to gain a more thorough understanding of the present invention and fully convey the scope of the present invention to those skilled in the art.

The technical solution described above will be described in detail below with reference to the accompanying drawings in the description and the specific implementations, to make it better understood.

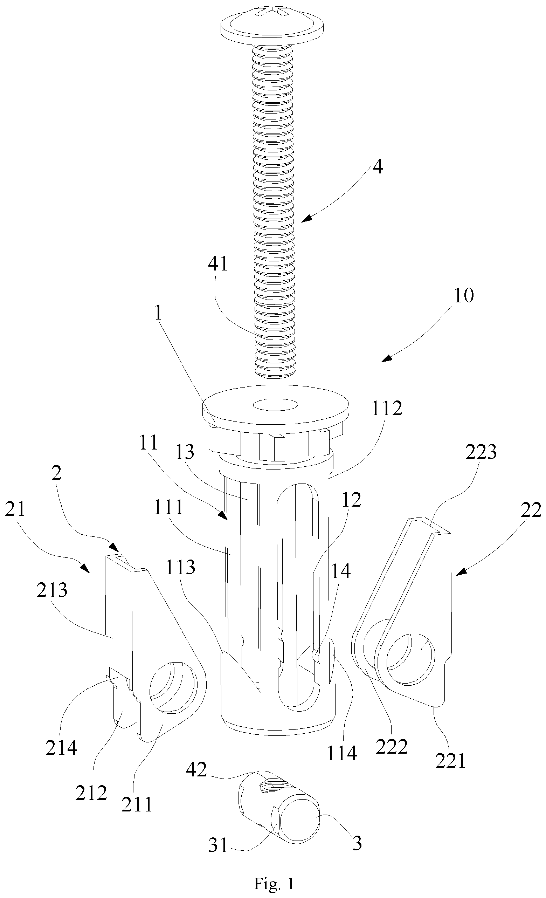

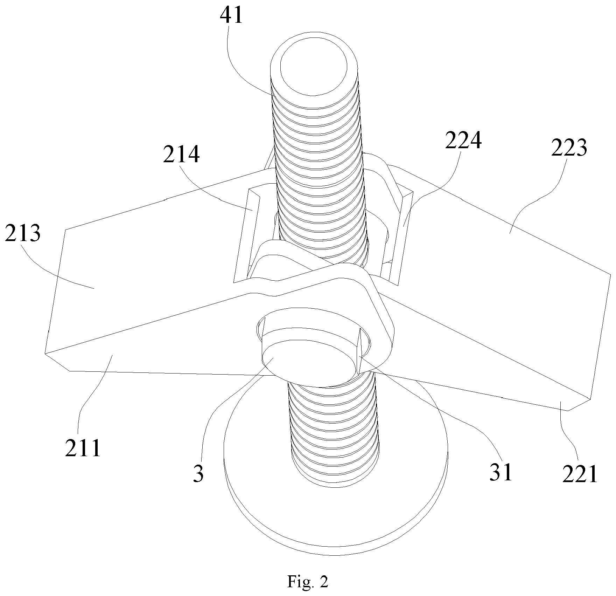

Fig. 1 is an exploded perspective view of a locking assembly, and Fig. 2 is an assembled perspective view of the locking assembly with an angle opposite that in Fig. 1.

As shown in Figs. 1 and 2, a locking assembly 10 in accordance with the present invention includes a retainer 1 and a fastener 2, the retainer 1 being provided with a sliding groove 11, the fastener 2 being formed by hinging two fastening sheets 21, 22 through a hinge shaft 3, the two fastening sheets being capable of moving in the sliding grooves 11, having a relative disengagement state and a relative engagement state, and being capable of being accommodated in the retainer 1 when in the relative engagement state, and a limiting structure for keeping the two fastening sheets at a specific disengagement angle being arranged between the two fastening sheets. The fastener 2 may be formed by hinging a first fastening sheet 21 and a second fastening sheet 22 through the hinge shaft 3, and the hinge shaft 3 may be a cylindrical nut.

The two fastening sheets are used as locking abutments, to realize a locking function when in the relative disengagement state; and the two fastening sheets may be accommodated in the retainer 1 when in the relative engagement state, to reduce an entire width of the two fastening sheets, and thus it is convenient to disassemble the retainer 1 and the fastener 2 integrally, and the locking assembly is rapidly disassembled and reusable.

As shown in Fig. 2, the first fastening sheet 21 and the second fastening sheet 22 include first hinge plates 211, 221 and second hinge plates 212, 222 which are oppositely arranged, and connecting plates 213, 223 for connecting the first hinge plates 211, 221 and the second hinge plates 212, 222, that is, the first fastening sheet 21 and the second fastening sheet 22 have the same structure, and the first fastening sheet 21 and the second fastening sheet 22 are oppositely arranged, the hinge shaft 3 being connected to the first hinge plates 211, 221 and the second hinge plates 212, 222. Parts, close to hinge ends, of the connecting plates 213, 223 of the first fastening sheet 21 and the second fastening sheet 22 are provided with cut grooves 214, 224 separately. The limiting structure which keeps the first fastening sheet 21 and the second fastening sheet 22 at the specific disengagement angle enables an end part of the hinge end of the first hinge plate 211 of the first fastening sheet 21 to be in abutting fit with a bottom of the cut groove 224 of the second fastening sheet 22, and an end part of the hinge end of the first hinge plate 221 of the second fastening sheet 22 to be in abutting fit with a bottom of the cut groove 214 of the first fastening sheet 21.

In order to install the hinge shaft 3 conveniently, the first hinge plates 211, 221 and the second hinge plates 212, 222 of the first fastening sheet 21 and the second fastening sheet 22 are triangular, and installation holes for the hinge shaft 3 are provided in the first hinge plates 211, 221 and the second hinge plates 212, 222.

In some examples, the sliding grooves 11 include a first sliding groove 111 and a second sliding groove 112 which are oppositely arranged and in communication with each other, the first fastening sheet 21 moving in the first sliding groove 111, and the second fastening sheet 22 moving in the second sliding groove 112. In this way, the fastener 2 moves stably.

The first sliding groove 111 is provided with a first inclined guide surface 113 for engaging the first fastening sheet 21 relative to the second fastening sheet 22, and the second sliding groove 112 is provided with a second inclined guide surface 114 for engaging the second fastening sheet 22 relative to the first fastening sheet 21, the first inclined guide surface 113 being opposite the second inclined guide surface 114. The retainer 1 is generally installed in a vertical direction. The first inclined guide surface 113 and the second inclined guide surface 114 are arranged on bottom side walls of the first sliding groove 111 and the second sliding groove 112 correspondingly. When an actuating positioner 4 moves the first fastening sheet 21 and the second fastening sheet 22 to the first inclined guide surface 113 and the second inclined guide surface 114 respectively, the first fastening sheet 21 is engaged relative to the second fastening sheet 22 when subjected to a pushing action of the first inclined guide surface 113, and meanwhile, the second fastening sheet 22 is engaged relative to the first fastening sheet 21 when subjected to a pushing action of the second inclined guide surface 114. In this way, the fastener 2 may be accommodated in the retainer 1.

In some examples, the retainer 1 is provided with a first sliding rail 12 and a second sliding rail 13 which are oppositely arranged and in communication with each other, a first end of the hinge shaft 3 moving in the first sliding rail 12, and a second end of the hinge shaft 3 moving in the second sliding rail 13. The first end and the second end of the hinge shaft 3 are provided with opposite sliding planes 31 separately, that is, the first end of the hinge shaft 3 is provided with the opposite sliding plane 31, the opposite sliding plane 31 being preferably arranged in parallel, and similarly, the second end of the hinge shaft 3 is provided with the opposite sliding plane 31, the opposite sliding plane 31 being preferably arranged in parallel. In this way, it may be ensured that the hinge shaft 3 moves along the first sliding rail 12 and the second sliding rail 13 without deviation.

At least one of opposite side walls of one ends, close to the first inclined guide surface 113 and the second inclined guide surface 114, of the first sliding rail 12 and the second sliding rail 13 is provided with a limiting protrusion point 14, the limiting protrusion point 14 dividing the first sliding rail 12 and the second sliding rail 13 into upper travel sections and lower travel sections, and the lower travel sections exactly accommodating the hinge shaft 3. Preferably, both opposite side walls of the first sliding rail 12 are provided with limiting protrusion points 14, and both opposite side walls of the second sliding rail 13 are provided with limiting protrusion points 14, the limiting protrusion points 14 arranged on the opposite side walls of the first sliding rail 12 and the limiting protrusion points 14 arranged on the opposite side walls of the second sliding rail 13 having the same height. When the hinge shaft 3 passes over the limiting protrusion point 14, a prompt sound is produced, and the hinge shaft 3 is limited in the lower travel sections of the first sliding rail 12 and the second sliding rail 13.

In some example, the locking assembly further includes an actuating positioner 4, the actuating positioner 4 being connected to the fastener 2 and capable of driving the fastener 2 to move and keeping the fastener 2 at a specific position. When the actuating positioner 4 drives the fastener 2 to move to different positions, the two fastening sheets have the relative disengagement state and the relative engagement state at different positions, and may be accommodated in the retainer 1 when in the relative engagement state, the limiting structure for keeping the two fastening sheets at the specific disengagement angle is arranged between the two fastening sheets, and the limiting structure keeps the two fastening sheets in the relative disengagement state.

Particularly, the actuating positioner 4 includes a bolt 41 and a threaded through hole 42 radially formed in the hinge shaft 3, the bolt 41 penetrating the retainer 1 to be connected to the threaded through hole 42. The bolt 41 is rotated to drive the hinge shaft 3 to move, and the hinge shaft 3 and the fastener 2 move in the sliding groove 11. When the bolt 41 stops rotating, the hinge shaft 3 stops moving, and the hinge shaft 3 is positioned at a specific position, so that the locking assembly has a simple structure and a low cost.

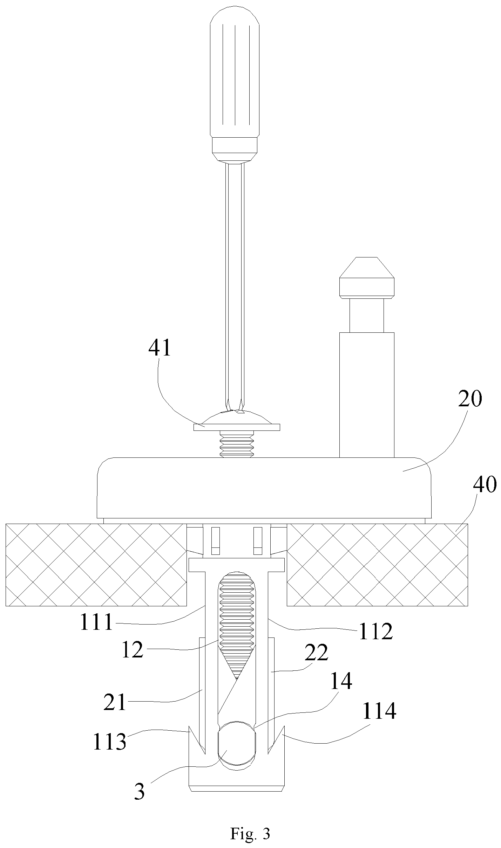

As shown in Fig. 3, when the locking assembly 10 is pre-assembled, the first fastening sheet 21, the second fastening sheet 22, and the hinge shaft 3 are installed in the retainer 1, the bolt 41 penetrates a support 20 and the retainer 1 to be in threaded connection with the threaded through hole 42 provided on the hinge shaft 3, and the first fastening sheet 21 is engaged relative to the second fastening sheet 22 and placed in the retainer 1. In such a condition, the hinge shaft 3 is limited in the lower travel sections of the first sliding rail 12 and the second sliding rail 13 and is limited by the limiting protrusion point 14, and thus the first fastening sheet 21, the second fastening sheet 22, and the hinge shaft 3 will not fall off and are integrally formed into a retainer 1 assembly, which is inserted into an installation hole of a toilet body 40.

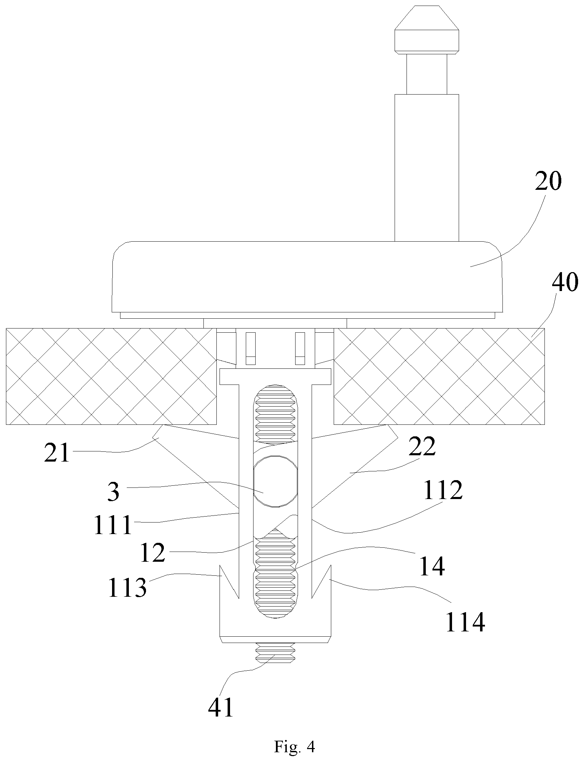

As shown in Fig. 4, when the locking assembly 10 locks, the bolt 41 is screwed, to drive the hinge shaft 3, the first fastening sheet 21, and the second fastening sheet 22 to move, the hinge shaft 3 moves upwards along the first sliding rail 12 and the second sliding rail 13 after passing over the limiting protrusion point 14, and the first end and the second end of the hinge shaft 3 are provided with the opposite sliding planes 31 separately, so as to ensure that the hinge shaft 3 may move up and down along the first sliding rail 12 and the second sliding rail 13 of the retainer 1 without deviating or falling off. The first fastening sheet 21 and the second fastening sheet 22 are disengaged to two sides under the action of gravity. The hinge shaft 3 rises continuously, disengagement angles of the first fastening sheet 21 and the second fastening sheet 22 are gradually increased, and the first fastening sheet 21 and the second fastening sheet 22 are clamped to each other through the limiting structure and kept at a specific disengagement angle. In such a condition, the first fastening sheet 21 and the second fastening sheet 22 are disengaged by a maximum angle and cannot be disengaged any more, the bolt 41 is screwed continuously, the first fastening sheet 21 and the second fastening sheet 22 abut against a lower surface of the toilet body 40, and the locking assembly 10 completely locks.

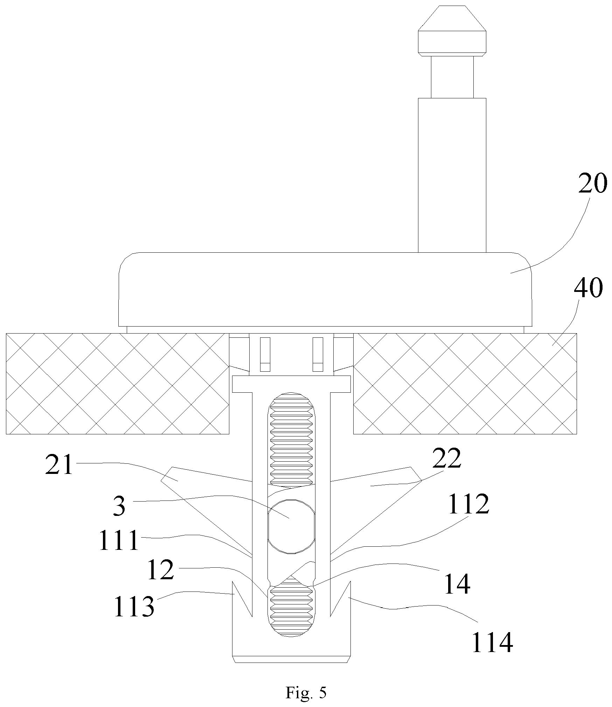

As shown in Fig. 5, when the locking assembly 10 unlocks, the bolt 41 is unscrewed, to drive the hinge shaft 3, the first fastening sheet 21, and the second fastening sheet 22 to descend until the first fastening sheet 21 and the second fastening sheet 22 make contact with the first inclined guide surface 113 and the second inclined guide surface 114 of the retainer 1 respectively, and the first fastening sheet 21 and the second fastening sheet 22 are engaged inward to be closed. When the hinge shaft 3 passes over the limiting protrusion point 14 and the bolt 41 is pressed downwards, a prompt sound showing that the hinge shaft 3 retreats to an exact position is obviously sensed. Driven by the hinge shaft 3, the first fastening sheet 21 and the second fastening sheet 22 may be completely retracted into the retainer 1, to realize unlocking.

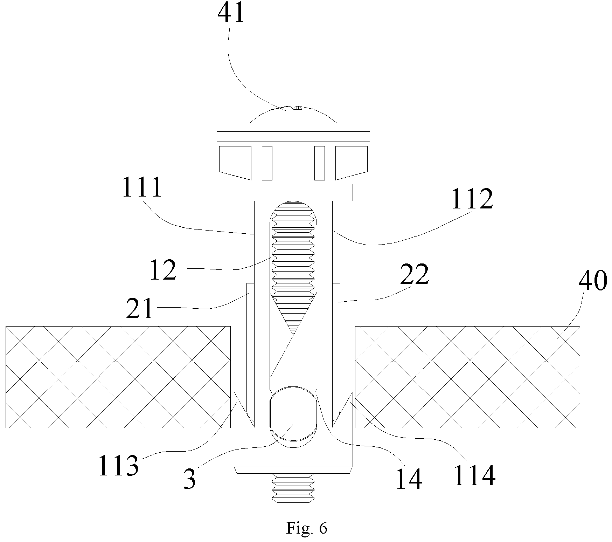

As shown in Fig. 6, the locking assembly 10 may be taken out integrally and reusable, and thus is rapidly disassembled and reusable.

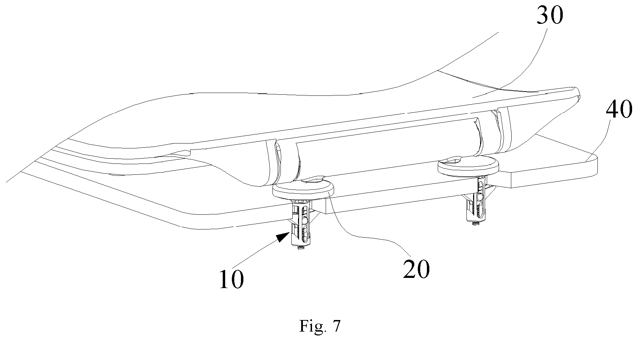

Fig. 7 is a structural schematic diagram of the locking assembly 10, installed at a toilet. As shown in Fig. 7, a toilet includes a locking assembly 10, a support 20, and a cover plate 30. The support 20 is installed on a toilet body 40 by means of the locking assembly 10, and the cover plate 30 is installed on the support 20. The locking assembly 10 includes a retainer 1 and a fastener 2, the retainer 1 being provided with a sliding groove 11, the fastener 2 being formed by hinging two fastening sheets, the two fastening sheets being capable of moving in the sliding grooves 11, having a relative disengagement state and a relative engagement state, and being capable of being accommodated in the retainer 1 when in the relative engagement state, and a limiting structure for keeping the two fastening sheets at a specific disengagement angle being arranged between the two fastening sheets.

The support 20 is installed on the toilet body 40 by means of the locking assembly 10, and the cover plate 30 is installed on the support 20. The two fastening sheets of the locking assembly are used as locking abutments, to realize a locking function when in the relative disengagement state; the two fastening sheets may be accommodated in the retainer 1 when in the relative engagement state, to reduce an entire width of the two fastening sheets, and thus it is convenient to disassemble the retainer 1 and the fastener 2 integrally, and the locking assembly is rapidly disassembled and reusable.

In the description of the present invention, it is to be understood that the terms "central", "longitudinal", "transverse", "length", "width", "thickness", "up", "down", "front", "back", "left", "right", "vertical", "horizontal", "top", "bottom", "inner", "outer", "clockwise", "counterclockwise", etc. indicate azimuthal or positional relations based on those shown in the accompanying drawings only for ease of description of the present invention and for simplicity of description, and are not intended to indicate or imply that the referenced device or element must have a particular orientation and be constructed and operative in a particular orientation, and thus may not be construed as a limitation on the present invention.

In addition, the terms "first" and "second" are for descriptive purposes only and are not to be construed as indicating or implying the relative importance or implicitly specifying the number of indicated technical features. Thus, a feature defined with "first" and "second" may explicitly or implicitly include one or more of the feature. In the description of the present invention, "plurality" means two or more, unless expressly specified otherwise.

In the present invention, unless expressly specified and limited otherwise, the terms "install", "connect", "connected", "fix", etc. are to be construed broadly and, for example, may be fixedly connected, or detachably connected, or integrally formed; may be mechanically connected, or electrically connected; and may be direct connected or indirect connected via an intermediary medium, or may be an internal communication between two elements or an interworking relation between two elements. The specific meanings of the terms described above in the present invention may be understood on a case-by-case basis for those of ordinary skill in the art.

In the present invention, unless expressly specified and limited otherwise, a case that a first feature is "above" or "below" a second feature may be direct contact between the first and second features, or contact between the first and second features through another feature therebetween, not direct contact. Also, a case that the first feature is "above", "on the upper portion of", and "on" the second feature may be that the first feature is right above and diagonally above the second feature, or simply indicates that a horizontal height of the first feature is higher than that of the second feature. A case that the first feature is "below", "on the lower portion of", and "underneath" the second feature may be that the first feature is right below and diagonally below the second feature, or simply indicates that a horizontal height of the first feature is lower than that of the second feature.

In the description of the present description, the descriptions with reference to terms such as "an embodiment", "some embodiments", "examples", "specific examples", or "some examples" mean that specific features, structures, materials, or characteristics described in combination with the embodiments or examples are included in at least one embodiment or example of the present invention. In the present description, the schematic expressions of the terms described above are not necessarily directed to the same embodiment or example. Moreover, the specific feature, structure, material or characteristic described may be combined in a suitable manner in any one or more embodiments or examples. In addition, a person skilled in the art may bind and combine different embodiments or examples described in the present description.

While the embodiment of the present invention has been illustrated and described above, it is to be understood that the embodiment described above is exemplary and is not to be construed as limiting the present invention; and variations, modifications, substitutions and alterations to the embodiment described above may be made by those of ordinary skill in the art within the scope of the present invention, as defined in the appended claims.

## Claims

1. A locking assembly (10), comprising:
a retainer (1) provided with first and second sliding grooves (111, 112) which are oppositely arranged and in communication with each other, the first fastening sheet moving in the first sliding groove, and the second fastening sheet moving in the second sliding groove;
a hinge shaft (3) capable of moving in the first and second sliding grooves (111, 112); and
a fastener (2) having first and second fastening sheets (21, 22) separately hinged to the hinge shaft (3), the fastener (2) having a relative disengagement state and a relative engagement state, each fastener (2) being capable of being accommodated in the retainer (1) when in the relative disengagement state and being provided with a limiting structure for keeping the fastener (2) at a specific disengagement angle, the locking assembly further comprising an actuating positioner, the actuating positioner being connected to the fastener and capable of driving the fastener to move and keeping the fastener at a specific position, wherein the actuating positioner comprises a bolt and a threaded through hole radially formed in the hinge shaft, the bolt penetrating the retainer to be connected to the threaded through hole **characterised in that** the first fastening sheet and the second fastening sheet comprise first hinge plates and second hinge plates which are oppositely arranged, and connecting plates for connecting the first hinge plate to the second hinge plate, parts, close to hinge ends, of the connecting plates of the first fastening sheet and the second fastening sheet being provided with cut grooves separately; and the limiting structure enabling an end part of the hinge end of the first hinge plate of the first fastening sheet to be in abutting fit with a bottom of the cut groove of the second fastening sheet, and an end part of the hinge end of the first hinge plate of the second fastening sheet to be in abutting fit with a bottom of the cut groove of the first fastening sheet, the first sliding groove (111) being provided with a first inclined guide surface (113) for engaging the first fastening sheet (21) relative to the second fastening sheet (22), the second sliding groove (112) being provided with a second inclined guide surface (114) for engaging the second fastening sheet (22) relative to the first fastening sheet (21), the first inclined guide surface (113) being disposed opposite the second inclined guide surface (114).

2. The locking assembly (10) according to claim 1, wherein the retainer (1) is provided with a first sliding rail (12) and a second sliding rail (13) which are oppositely arranged and in communication with each other, a first end of the hinge shaft (3) moving in the first sliding rail (12), a second end of the hinge shaft (3) moving in the second sliding rail (13), and the first end and the second end of the hinge shaft (3) being provided with opposite sliding planes separately.

3. The locking assembly (10) according to claim 2, wherein at least one of opposite side walls of one ends, close to a first inclined guide surface (113) and a second inclined guide surface (114), of the first sliding rail (12) and the second sliding rail (13) is provided with a limiting protrusion point (14), the limiting protrusion point (14) dividing the first sliding rail (12) and the second sliding rail (13) into upper travel sections and lower travel sections, and the lower travel sections exactly accommodating the hinge shaft (3).

## Patentansprüche

1. Verriegelungsanordnung (10), umfassend:
einen Halter (1), der mit einer ersten und einer zweiten Gleitrille (111, 112) bereitgestellt ist, die einander gegenüberliegend angeordnet sind und miteinander in Verbindung stehen, wobei sich das erste Befestigungsteil in der ersten Gleitrille bewegt und sich das zweite Befestigungsteil in der zweiten Gleitrille bewegt;
eine Scharnierwelle (3), die in der Lage ist, sich in der ersten und in der zweiten Gleitrille (111, 112) zu bewegen; und
ein Befestigungselement (2), das ein erstes und ein zweites Befestigungsteil (21, 22) aufweist, die getrennt voneinander an der Scharnierwelle (3) eingehängt sind, wobei das Befestigungselement (2) einen relativen Freigabezustand und einen relativen Eingriffszustand aufweist, wobei jedes Befestigungselement (2) in der Lage ist, in dem Halter (1) aufgenommen zu werden, wenn es sich in dem relativen Freigabezustand befindet, und mit einer Begrenzungsstruktur bereitgestellt ist, um das Befestigungselement (2) in einem bestimmten Freigabewinkel zu halten, wobei die Verriegelungsanordnung ferner einen Betätigungspositionierer umfasst, wobei der Betätigungspositionierer mit dem Befestigungselement verbunden ist und in der Lage ist, das Befestigungselement anzutreiben, um sich zu bewegen, und das Befestigungselement in einer bestimmten Position zu halten, wobei der Betätigungspositionierer einen Bolzen und ein Gewindedurchgangsloch, das radial in der Scharnierwelle ausgebildet ist, umfasst, wobei der Bolzen den Halter durchdringt, um mit dem Gewindedurchgangsloch verbunden zu werden, **dadurch gekennzeichnet, dass** das erste Befestigungsteil und das zweite Befestigungsteil erste Scharnierplatten und zweite Scharnierplatten, die einander gegenüberliegend angeordnet sind, und Verbindungsplatten zum Verbinden der ersten Scharnierplatte mit der zweiten Scharnierplatte umfassen, wobei Teile der Verbindungsplatten des ersten Befestigungsteils und des zweiten Befestigungsteils in der Nähe der Scharnierenden getrennt voneinander mit geschnittenen Rillen versehen sind; und die Begrenzungsstruktur es ermöglicht, dass ein Endteil des Scharnierendes der ersten Scharnierplatte des ersten Befestigungsteils an einem Boden der geschnittenen Rille des zweiten Befestigungsteils anliegt und dass ein Endteil des Scharnierendes der ersten Scharnierplatte des zweiten Befestigungsteils an einem Boden der geschnittenen Rille des ersten Befestigungsteils anliegt, wobei die erste Gleitrille (111) mit einer ersten geneigten Führungsfläche (113) bereitgestellt ist, um das erste Befestigungsteil (21) relativ zu dem zweiten Befestigungsteil (22) in Eingriff zu bringen, wobei die zweite Gleitrille (112) mit einer zweiten geneigten Führungsfläche (114) bereitgestellt ist, um das zweite Befestigungsteil (22) relativ zu dem ersten Befestigungsteil (21) in Eingriff zu bringen, wobei die erste geneigte Führungsfläche (113) gegenüber der zweiten geneigten Führungsfläche (114) angeordnet ist.

2. Verriegelungsanordnung (10) nach Anspruch 1, wobei der Halter (1) mit einer ersten Gleitschiene (12) und einer zweiten Gleitschiene (13) bereitgestellt ist, die einander gegenüberliegend angeordnet sind und miteinander in Verbindung stehen, ein erstes Ende der Scharnierwelle (3) sich in der ersten Gleitschiene (12) bewegt, ein zweites Ende der Scharnierwelle (3) sich in der zweiten Gleitschiene (13) bewegt und das erste Ende und das zweite Ende der Scharnierwelle (3) getrennt voneinander mit entgegengesetzten Gleitebenen bereitgestellt sind.

3. Verriegelungsanordnung (10) nach Anspruch 2, wobei mindestens eine von gegenüberliegenden Seitenwänden eines Endes der ersten Gleitschiene (12) und der zweiten Gleitschiene (13) in der Nähe einer ersten geneigten Führungsfläche (113) und einer zweiten geneigten Führungsfläche (114) mit einem begrenzenden Vorsprungspunkt (14) bereitgestellt ist, wobei der begrenzende Vorsprungspunkt (14) die erste Gleitschiene (12) und die zweite Gleitschiene (13) in obere Bewegungsabschnitte und untere Bewegungsabschnitte unterteilt und wobei die unteren Bewegungsabschnitte die Scharnierwelle (3) exakt aufnehmen.

## Revendications

1. Ensemble de verrouillage (10), comprenant :
un organe de retenue (1) muni de première et seconde rainures de coulissement (111, 112) qui sont agencées de manière opposée et en communication l'une avec l'autre, la première feuille d'attache se déplaçant dans la première rainure de coulissement, et la seconde feuille d'attache se déplaçant dans la seconde rainure de coulissement ;
un arbre d'articulation (3) apte à se déplacer dans les première et seconde rainures de coulissement (111, 112) ; et une attache (2) ayant des première et seconde feuilles d'attache (21, 22) articulées séparément sur l'arbre d'articulation (3), l'attache (2) ayant un état de désengagement relatif et un état d'engagement relatif, chaque attache (2) étant apte à être accueillie dans l'organe de retenue (1) lorsqu'elle est dans l'état de désengagement relatif et étant pourvue d'une structure de limitation permettant de garder l'attache (2) à un angle de désengagement spécifique, l'ensemble de verrouillage comprenant en outre un positionneur d'actionnement, le positionneur d'actionnement étant relié à l'attache et apte à entraîner l'attache pour la déplacer et la garder à une position spécifique, dans lequel le positionneur d'actionnement comprend un boulon et un trou traversant fileté formé radialement dans l'arbre d'articulation, le boulon pénétrant dans l'organe de retenue pour être relié au trou traversant fileté, **caractérisé en ce que** la première feuille d'attache et la seconde feuille d'attache comprennent des premières plaques d'articulation et des secondes plaques d'articulation qui sont agencées de manière opposée, et des plaques de liaison pour relier la première plaque d'articulation à la seconde plaque d'articulation, des parties, proches des extrémités d'articulation, des plaques de liaison de la première feuille d'attache et de la seconde feuille d'attache étant pourvues de rainures découpées séparément ; et la structure de limitation permettant à une partie d'extrémité de l'extrémité d'articulation de la première plaque d'articulation de la première feuille d'attache d'être en ajustement bout à bout avec un fond de la rainure découpée de la seconde feuille d'attache, et une partie d'extrémité de l'extrémité d'articulation de la première plaque d'articulation de la seconde feuille d'attache devant être en ajustement bout à bout avec un fond de la rainure découpée de la première feuille d'attache, la première rainure coulissante (111) étant pourvue d'une première surface de guidage inclinée (113) pour engager la première feuille d'attache (21) par rapport à la seconde feuille d'attache (22), la seconde rainure de coulissement (112) étant pourvue d'une seconde surface de guidage inclinée (114) pour engager la seconde feuille d'attache (22) par rapport à la première feuille d'attache (21), la première surface de guidage inclinée (113) étant disposée à l'opposé de la seconde surface de guidage inclinée (114).

2. Ensemble de verrouillage (10) selon la revendication 1, dans lequel l'organe de retenue (1) est pourvu d'un premier rail coulissant (12) et d'un second rail coulissant (13) qui sont agencés de manière opposée et en communication l'un avec l'autre, une première extrémité de l'arbre d'articulation (3) se déplaçant dans le premier rail coulissant (12), une seconde extrémité de l'arbre d'articulation (3) se déplaçant dans le second rail coulissant (13), et la première extrémité et la seconde extrémité de l'arbre d'articulation (3) étant pourvues de plans coulissants opposés séparément.

3. Ensemble de verrouillage (10) selon la revendication 2, dans lequel au moins l'une des parois latérales opposées d'une extrémité, proche d'une première surface de guidage inclinée (113) et d'une seconde surface de guidage inclinée (114), du premier rail coulissant (12) et du second rail coulissant (13) est pourvue d'un point de protubérance limitant (14), le point de protubérance limitant (14) divisant le premier rail coulissant (12) et le second rail coulissant (13) en sections de parcours supérieures et en sections de parcours inférieures, et les sections de parcours inférieures accueillant exactement l'arbre d'articulation (3).
